# EUROPÄISCHE PATENTANMELDUNG

(11) **EP 3 889 490 A1**
(43) Veröffentlichungstag der Anmeldung: **06.10.2021**
(21) Anmeldenummer: 20020154.9
(22) Anmeldetag: 03.04.2020
(51) Int. Cl.: F17C 7/04, F17C 9/00

(54) **FÖRDERVORRICHTUNG, SPEICHERBEHÄLTERANORDNUNG UND VERFAHREN**

(71) Anmelder: Linde GmbH, 82049 Pullach (DE)
(72) Erfinder: Aigner, Herbert, 84367 Reut-Taubenbach (DE); Schönberger, Manfred, 83342 Tacherting (DE)
(74) Vertreter: Meilinger, Claudia Sabine

(57) **Zusammenfassung**

Fördervorrichtung (29) zum Fördern eines Kryogens (H2) von einem Speicherbehälter (5) zu einem Verbraucher (4), mit einem ersten Behälter (13) zum Zwischenspeichern des Kryogens (H2), einem zweiten Behälter (14) zum Zwischenspeichern des Kryogens (H2), einem dritten Behälter (15) zum Zwischenspeichern des Kryogens (H2), und einer Ventileinrichtung (30), wobei die Ventileinrichtung (30) dazu eingerichtet ist, die Behälter (13 - 15) wahlweise in unterschiedliche Zustände (A, DAB1, DAB2, DAU1, DAU2, F, W1, W2) zu schalten, wobei stets einer der Behälter (13 - 15) in einen Arbeitszustand (A) geschaltet ist, in welchem der jeweilige Behälter (13 - 15) in Fluidverbindung mit dem Verbraucher (4) ist und so das Kryogen (H2) zu dem Verbraucher (4) fördert, und wobei die anderen beiden Behälter (13 - 15) wahlweise jeweils in einen Druckabbauzustand (DAB1, DAB2), in einen Druckaufbauzustand (DAU1, DAU2), in einen Füllzustand (F) oder in einen Wartezustand (W1, W2) geschaltet sind.

## Beschreibung

Die Erfindung betrifft eine Fördervorrichtung zum Fördern eines Kryogens, eine Speicherbehälteranordnung mit einer derartigen Fördervorrichtung und ein Verfahren zum Fördern eines Kryogens.

Speicherbehälter für flüssigen Wasserstoff können gemäß betriebsinternen Erkenntnissen der Anmelderin einen Druckaufbauverdampfer aufweisen, welcher es ermöglicht, innerhalb des Speicherbehälters einen Druck aufzubauen, so dass der Wasserstoff einem Verbraucher, beispielsweise in Form einer Brennstoffzelle, mit einem stabilen Versorgungsdruck zwischen 3,5 und 5 bar zur Verfügung gestellt werden kann. Bei einem Betrieb eines derartigen Speicherbehälters im maritimen Bereich, kann die natürliche Bewegung durch den Seegang dazu führen, dass die Betriebsbedingungen in dem Speicherbehälter nur sehr schwer so stabil gehalten werden können, dass der erforderliche Versorgungsdruck für die Brennstoffzelle konstant bereitgestellt werden kann. Der Anmelderin ist ferner betriebsinterner Stand der Technik bekannt, bei dem der Wasserstoff in dem Speicherbehälter annähernd drucklos gelagert wird. In diesem Fall wird der Wasserstoff mit Hilfe einer Kryopumpe gefördert und der Brennstoffzelle mit dem zuvor erwähnten Versorgungsdruck von 3,5 bis 5 bar zugeführt. Eine derartige Kryopumpe weist jedoch bewegliche Teile auf, was zu einem gewissen Wartungsaufwand und damit zu Stillstandszeiten führen kann.

Vor diesem Hintergrund besteht die Aufgabe der vorliegenden Erfindung darin, eine verbesserte Fördervorrichtung zum Fördern eines Kryogens zur Verfügung zu stellen.

Demgemäß wird eine Fördervorrichtung zum Fördern eines Kryogens von einem Speicherbehälter zu einem Verbraucher vorgeschlagen. Die Fördervorrichtung umfasst einen ersten Behälter zum Zwischenspeichern des Kryogens, einen zweiten Behälter zum Zwischenspeichern des Kryogens, einen dritten Behälter zum Zwischenspeichern des Kryogens, und eine Ventileinrichtung, wobei die Ventileinrichtung dazu eingerichtet ist, die Behälter wahlweise in unterschiedliche Zustände zu schalten, wobei stets einer der Behälter in einen Arbeitszustand geschaltet ist, in welchem der jeweilige Behälter in Fluidverbindung mit dem Verbraucher ist und so das Kryogen zu dem Verbraucher fördert, und wobei die anderen beiden Behälter wahlweise jeweils in einen Druckabbauzustand, in einen Druckaufbauzustand, in einen Füllzustand oder in einen Wartezustand geschaltet sind.

Dadurch, dass die Ventileinrichtung geeignet ist, die Behälter in einen Druckaufbauzustand zu schalten, kann auf eine Druckbeaufschlagung des Speicherbehälters selbst verzichtet werden. Das Kryogen kann demnach in dem Speicherbehälter drucklos oder zumindest annähernd drucklos gelagert werden. Im Vergleich zu einer mechanischen Kryopumpe weist die Fördervorrichtung bis auf Ventile der Ventileinrichtung keine beweglichen Teile auf. Die Fördervorrichtung ist somit auch bei tiefen Temperaturen robust und wartungsfrei. Mit Hilfe der Fördervorrichtungen können stabile Betriebsbedingungen für den kontinuierlichen Betrieb des Verbrauchers erreicht werden. Es kann ein stabiler Betrieb unabhängig von Bewegungen durch den Seegang sowie unabhängig von thermodynamischen Gleichgewichten von Schichtungen des Kryogens in dem Speicherbehälter erreicht werden. Die erforderliche Förderung und Druckerhöhung des Kryogens wird vorteilhafterweise rein durch die Nutzung verfahrenstechnischer Effekte erreicht.

Die Fördervorrichtung ist insbesondere eine thermische Fördervorrichtung oder thermische Pumpe oder kann als solche bezeichnet werden. "Thermisch" bedeutet in diesem Zusammenhang im Vergleich zu "mechanisch", dass die Fördervorrichtung, beispielsweise im Gegensatz zu einer mechanischen Kryopumpe, mit Ausnahme von Ventilen der Ventileinrichtung keine beweglichen Teile aufweist. Das Fördern des Kryogens erfolgt bevorzugt nur mit Hilfe verfahrenstechnischer beziehungsweise thermodynamischer Effekte. Das Kryogen ist vorzugsweise Wasserstoff. Deshalb kann die Fördervorrichtung auch als Wasserstoff-Fördervorrichtung oder thermische Wasserstoff-Fördervorrichtung bezeichnet werden. Das Kryogen kann jedoch auch ein beliebiges anderes Kryogen sein. Beispiele für kryogene Fluide oder Flüssigkeiten, oder kurz Kryogene, sind neben dem zuvor erwähnten Wasserstoff flüssiges Helium, flüssiger Stickstoff oder flüssiger Sauerstoff.

Unter einem "Kryogen" ist somit insbesondere eine Flüssigkeit zu verstehen. Das Kryogen wird dem Verbraucher selbst insbesondere in gasförmiger Form zugeführt. Das heißt, das Kryogen wird vor dem Verbraucher oder stromaufwärts des Verbrauchers verdampft. Nach dem Verdampfen ist das Kryogen ein Gas oder wird als gasförmiges oder verdampftes Kryogen bezeichnet. Die Fördervorrichtung ist insbesondere geeignet, das Kryogen, das zu dem Gas verdampfte Kroygen und/oder ein Gemisch aus dem Kryogen und dem Gas beziehungsweise dem verdampften Kryogen zu fördern.

In dem Speicherbehälter und in den Behältern zum Zwischenspeichern des Kryogens bilden sich nach oder bei dem Einfüllen des Kryogens eine Gaszone sowie eine darunterliegende Flüssigkeitszone. Zwischen der Gaszone und der Flüssigkeitszone ist eine Phasengrenze vorgesehen. Das Kryogen weist also nach dem Einfüllen in den Speicherbehälter und in die Behälter vorzugsweise zwei Phasen mit unterschiedlichen Aggregatszuständen, nämlich flüssig und gasförmig, auf. Die flüssige Phase kann in die gasförmige Phase und umgekehrt übergehen.

Der Speicherbehälter ist vorzugsweise rotationssymmetrisch zu einer Mittel- oder Symmetrieachse aufgebaut. Der Speicherbehälter ist somit bevorzugt zylinderförmig. Auch die Behälter zum Zwischenspeichern des Kryogens sind jeweils rotationssymmetrisch zu einer Mittel- oder Symmetrieachse aufgebaut. Das heißt, auch die Behälter sind vorzugsweise zylinderförmig. Bevorzugt ist ein Volumen des Speicherbehälters größer als ein jeweiliges Volumen der einzelnen Behälter. Darunter, dass die Behälter das Kryogen "zwischenspeichern", ist vorliegend zu verstehen, dass das Kryogen von dem Speicherbehälter in den jeweiligen Behälter gefördert wird, dort zwischengespeichert wird und dann von dem jeweiligen Behälter dem Verbraucher zugeführt wird.

Der erste Behälter kann auch als erster Zwischenspeicherbehälter oder als erster Konditionierbehälter bezeichnet werden. Der zweite Behälter kann auch als zweiter Zwischenspeicherbehälter oder als zweiter Konditionierbehälter bezeichnet werden. Der dritte Behälter kann auch als dritter Zwischenspeicherbehälter oder als dritter Konditionierbehälter bezeichnet werden. Es können auch mehr als drei Behälter vorgesehen sein. Der Verbraucher ist vorzugsweise eine Brennstoffzelle. Unter einer "Brennstoffzelle" ist vorliegend eine galvanische Zelle zu verstehen, welche die chemische Reaktionsenergie eines kontinuierlich zugeführten Brennstoffs, vorliegend Wasserstoff, und eines Oxidationsmittels, vorliegend Sauerstoff, in elektrische Energie wandelt.

Die Ventileinrichtung umfasst vorzugsweise eine Vielzahl an Ventilen, mit deren Hilfe der Speicherbehälter, die Behälter zum Zwischenspeichern des Kryogens und der Verbraucher miteinander verschaltet werden können. "Miteinander verschaltet" bedeutet vorliegend, dass je nach Schaltstellung des jeweiligen Ventils, nämlich Auf oder Zu, das Kryogen von dem Speicherbehälter zu den Behältern und von den Behältern zu dem Verbraucher strömen kann oder gefördert wird. Dabei können jedem Behälter zum Zwischenspeichern des Kryogens mehrere Ventile zugeordnet sein. Die Ventileinrichtung kann als ein Ventilblock ausgebildet sein, in oder an dem die Ventile angeordnet sind. Alternativ können die Ventile auch dezentral jeweils an dem Speicherbehälter und an den Behältern zum Zwischenspeichern des Kryogens vorgesehen sein. Auch in diesem Fall bildet die Gesamtheit der Ventile die Ventileinrichtung.

Die Zustände, in welche die Behälter zum Zwischenspeichern des Kryogens mit Hilfe der Ventileinrichtung geschaltet oder verbracht werden können, umfassen bevorzugt neben dem Arbeitszustand einen ersten Druckabbauzustand, in welchem in dem jeweiligen Behälter Druck abgebaut wird, und einen zweiten Druckabbauzustand, in welchem gegenüber dem ersten Druckabbauzustand weiter Druck in dem jeweiligen Behälter abgebaut wird. Ferner umfassen die Zustände insbesondere einen ersten Druckaufbauzustand, in welchem nach dem Befüllen des jeweiligen Behälters in dem Behälter Druck aufgebaut wird, einen zweiten Druckaufbauzustand, in welchem gegenüber dem ersten Druckaufbauzustand weiter Druck aufgebaut wird, den Füllzustand, in welchem der jeweilige Behälter von dem Speicherbehälter mit dem Kryogen beaufschlagt wird, einen ersten Wartezustand, in welchem sich der jeweilige Behälter nach dem Füllzustand befindet, und einen zweiten Wartezustand, in welchem sich der jeweilige Behälter nach dem zweiten Druckaufbauzustand befindet.

Jeder Behälter zum Zwischenspeichern des Kryogens durchfährt die zuvor genannten Zustände nacheinander, beginnend mit dem Füllzustand bis zu dem zweiten Druckabbauzustand. Dabei durchlaufen die einzelnen Behälter die Zustände zeitversetzt. Das heißt beispielsweise, dass sich der erste Behälter in dem Füllzustand befindet während sich der zweite Behälter in dem zweiten Druckaufbauzustand befindet und während sich der dritte Behälter in dem Arbeitszustand befindet. Dabei schaltet die Ventileinrichtung die Behälter derart, dass sich immer einer der Behälter in dem Arbeitszustand befindet, so dass dem Verbraucher das Kryogen kontinuierlich und nicht diskontinuierlich zugeführt werden kann. Dass der sich in dem Arbeitszustand befindende Behälter in "Fluidverbindung" mit dem Verbraucher ist, bedeutet vorliegend, dass die entsprechenden Ventile der Ventileinrichtung derart geschaltet sind, dass das Kryogen von dem Behälter zu dem Verbraucher strömen kann.

Gemäß einer Ausführungsform sind jedem Behälter ein erstes Einlassventil, ein zweites Einlassventil, ein erstes Auslassventil und ein zweites Auslassventil der Ventileinrichtung zugeordnet.

Die Ventile sind vorzugsweise als Magnetventile oder als Absperrschieber ausgebildet. Die Ventile können automatisiert betätigt werden. Hierzu kann eine Steuereinheit vorgesehen sein. Vorzugsweise sind die Ventile Auf-Zu-Ventile. Das heißt, die Ventile sind jeweils entweder vollständig geöffnet oder vollständig geschlossen.

Gemäß einer weiteren Ausführungsform weist jeder Behälter ein Heizelement zum Einbringen von Wärme in das in dem jeweiligen Behälter aufgenommene Kryogen auf.

Das Heizelement kann ein elektrisches Heizelement sein. Das Heizelement kann jedoch auch ein luft- oder wasserbeheizter Wärmeaustauscher sein. Mit Hilfe des jeweiligen Heizelements kann der dem Heizelement zugeordnete Behälter von dem ersten Druckaufbauzustand in den zweiten Druckaufbauzustand verbracht werden. Hierzu werden sämtliche dem Behälter zugeordneten Ventile geschlossen. Das Heizelement ist geeignet, das Kryogen zumindest teilweise zu verdampfen. Das Heizelement kann somit ein Druckaufbauverdampfer sein.

Gemäß einer weiteren Ausführungsform umfasst die Fördervorrichtung ferner eine Zufuhrleitung zum Zuführen des Kryogens von dem Speicherbehälter zu dem jeweiligen Behälter, wobei die Behälter parallel in die Zufuhrleitung geschaltet sind.

Die Zufuhrleitung verzweigt sich derart, dass die Behälter parallel zueinander angeordnet sind. Das heißt, der Speicherbehälter kann wahlweise mit genau einem der Behälter in Fluidverbindung gebracht werden. "In Fluidverbindung" bedeutet vorliegend, dass das Kryogen von dem Speicherbehälter zu einem der Behälter gefördert wird beziehungsweise, dass das Kryogen von einem der Behälter zu dem Verbraucher gefördert wird. Die Zufuhrleitung umfasst bevorzugt die ersten Einlassventile der Behälter sowie ein dem Speicherbehälter zugeordnetes Ventil.

Gemäß einer weiteren Ausführungsform umfasst die Fördervorrichtung ferner eine Abfuhrleitung zum Abführen des Kryogens von dem jeweiligen Behälter zu dem Verbraucher, wobei die Behälter parallel in die Abfuhrleitung geschaltet sind.

Das heißt, auch die Abfuhrleitung verzweigt sich wie die Zufuhrleitung. An oder in der Abfuhrleitung sind die ersten Auslassventile der Behälter angeordnet. Die Fördervorrichtung umfasst weiterhin eine Druckaufbauleitung, mit deren Hilfe die Behälter von dem ersten Wartezustand in den ersten Druckaufbauzustand verbracht werden können. Die Druckaufbauleitung umfasst die zweiten Einlassventile der Ventileinrichtung. Die Fördervorrichtung umfasst ferner eine Druckabbauleitung, welche die zweiten Auslassventile aufweist. Auch die Druckaufbauleitung und die Druckabbauleitung verzweigen sich, so dass die Behälter parallelgeschaltet werden können.

Gemäß einer weiteren Ausführungsform weist die Ventileinrichtung ein Entspannungsventil, insbesondere ein Joule-Thomson-Ventil, zum Entspannen des Kryogens vor dem Zuführen desselben zu dem Verbraucher auf.

Das heißt, das Entspannungsventil ist dem Verbraucher vorgeschaltet oder stromaufwärts des Verbrauchers angeordnet. Das Entspannungsventil ist geeignet, das von dem jeweiligen sich in dem Arbeitszustand befindenden Behälter zu dem Entspannungsventil geförderte Kryogen von einem Druck von 8 bis 9 bar auf einen Druck von 3,5 bis 5 bar zu entspannen. Dem Verbraucher kann das Kryogen somit mit einem konstanten Versorgungsdruck von 3,5 bis 5 bar zugeführt werden.

Gemäß einer weiteren Ausführungsform umfasst die Fördervorrichtung ferner einen stromabwärts des Entspannungsventils angeordneten Wärmetauscher zur Kälterückgewinnung aus dem entspannten Kryogen.

Der Wärmetauscher ist insbesondere zwischen dem Entspannungsventil und dem Verbraucher angeordnet. Mit Hilfe des Wärmetauschers kann von einem sich in dem zweiten Druckabbauzustand befindenden Behälter zu einem sich in dem ersten Druckaufbauzustand befindenden Behälter strömendes Kryogen Wärme auf das entspannte Kryogen übertragen werden. Die Kälte des entspannten Kryogens kann somit rückgewonnen werden. Dem Wärmetauscher nachgeschaltet ist bevorzugt ein weiteres Entspannungsventil, insbesondere ein Joule-Thomson-Ventil.

Weiterhin wird eine Speicherbehälteranordnung mit einem Speicherbehälter zum Speichern eines Kryogens, einem Verbraucher, insbesondere einer Brennstoffzelle, und einer wie zuvor erläuterten Fördervorrichtung vorgeschlagen.

Der Speicherbehälter ist insbesondere für maritime Anwendungen geeignet. Der Speicherbehälter kann daher als maritimer Speicherbehälter bezeichnet werden. Beispielsweise kann der Speicherbehälter an einem Fahrzeug, insbesondere an einem Wasserfahrzeug, montiert sein. Demgemäß wird auch ein Fahrzeug, insbesondere ein Wasserfahrzeug, mit einem derartigen Speicherbehälter beziehungsweise mit einer derartigen Fördervorrichtung vorgeschlagen. Der Speicherbehälter kann auch als Speichertank, insbesondere als Wasserstoff-Speicherbehälter oder als Wasserstoff-Speichertank, bezeichnet werden.

Ferner wird ein Verfahren zum Fördern eines Kryogens von einem Speicherbehälter zu einem Verbraucher mit Hilfe einer Fördervorrichtung, welche einen ersten Behälter zum Zwischenspeichern des Kryogens, einen zweiten Behälter zum Zwischenspeichern des Kryogens, einen dritten Behälter zum Zwischenspeichern des Kryogens, und eine Ventileinrichtung aufweist, vorgeschlagen. Das Verfahren umfasst die folgenden Schritte: a) Schalten der Ventileinrichtung derart, dass stets einer der Behälter in einen Arbeitszustand verbracht wird, in welchem der jeweilige Behälter in Fluidverbindung mit dem Verbraucher ist und so das Kryogen zu dem Verbraucher gefördert wird, und b) Schalten der Ventileinrichtung derart, dass während des Schritts a) die anderen beiden Behälter wahlweise in einen Druckabbauzustand, in einen Druckaufbauzustand, in einen Füllzustand oder in einen Wartezustand verbracht werden.

Das Schalten der Ventileinrichtung erfolgt dadurch, dass die Ventile der Ventilvorrichtung entweder geschlossen oder geöffnet werden. In dem Arbeitszustand sind beispielsweise das jeweilige erste Auslassventil des sich in dem Arbeitszustand befindenden Behälters und das dem Wärmetauscher vorgeschaltete Entspannungsventil geöffnet, so dass das Kryogen von dem sich in dem Arbeitszustand befindenden Behälter über das Entspannungsventil und den Wärmetauscher zu dem Verbraucher strömen kann. Das Verfahren wird dabei derart durchgeführt, dass immer einer der Behälter in dem Arbeitszustand betrieben wird. Hierdurch kann dem Verbraucher das Kryogen kontinuierlich zugeführt werden. Beispielsweise befindet sich der erste Behälter in dem Arbeitszustand, und die beiden anderen Behälter nicht. Sobald sich der erste Behälter nicht mehr in dem Arbeitszustand befindet, befindet sich der zweite Behälter in dem Arbeitszustand. Sobald sich der zweite Behälter nicht mehr in dem Arbeitszustand befindet, befindet sich der dritte Behälter in dem Arbeitszustand.

Gemäß einer Ausführungsform werden in dem Schritt b) die anderen beiden Behälter wahlweise in einen ersten Druckabbauzustand, in einen zweiten Druckabbauzustand, in einen ersten Druckaufbauzustand, in einen zweiten Druckaufbauzustand, in den Füllzustand, in einen ersten Wartezustand oder in einen zweiten Wartezustand verbracht.

Die Abfolge der Zustände ist vorzugsweise wie folgt. Nach dem Füllzustand folgt der erste Wartezustand, auf welchen der erste Druckaufbauzustand folgt, auf welchen der zweite Druckaufbauzustand folgt, auf welchen der zweite Wartezustand folgt, auf welchen der Arbeitszustand folgt. Auf den Arbeitszustand folgt der erste Druckabbauzustand, auf welchen der zweite Druckabbauzustand folgt. Jeder Behälter wird somit mit mehreren aufeinanderfolgenden Zuständen betrieben. Dabei wird der Arbeitszustand vorzugsweise von demselben Behälter viermal aufeinanderfolgend durchgeführt, während sich die anderen beiden Behälter in dem Füllzustand, in einem der Wartezustände, in einem der Druckaufbauzustände oder in einem der Druckabbauzustände befinden.

Gemäß einer weiteren Ausführungsform wird in dem Schritt b) derjenige Behälter, welcher in den Füllzustand verbracht wird, in Fluidverbindung mit dem Speicherbehälter gebracht, so dass das Kryogen aus dem Speicherbehälter in den sich in dem Füllzustand befindenden Behälter gefördert wird.

Hierzu wird das jeweilige erste Einlassventil des Behälters geöffnet. Ferner ist, wie zuvor erwähnt, auch dem Speicherbehälter ein Ventil zugeordnet, das in dem Füllzustand ebenfalls geöffnet ist, so dass das Kryogen von dem Speicherbehälter über das geöffnete Ventil des Speicherbehälters, die Zufuhrleitung und das geöffnete erste Einlassventil in den jeweiligen Behälter strömen kann.

Gemäß einer weiteren Ausführungsform wird in dem Schritt b) der sich in dem Füllzustand befindende Behälter dadurch in den ersten Druckaufbauzustand verbracht, dass der sich in dem Füllzustand befindende Behälter mit demjenigen Behälter, welcher in den zweiten Druckabbauzustand verbracht wird, in Fluidverbindung gebracht wird, so dass der sich in dem ersten Druckaufbauzustand befindende Behälter von dem sich in dem zweiten Druckabbauzustand befindenden Behälter mit Druck beaufschlagt wird.

Das heißt, der Druck, der in denjenigem Behälter herrscht, welcher in den zweiten Druckaufbauzustand verbracht wird, wird genutzt, um den Druck in dem Behälter zu erhöhen, welcher sich in dem ersten Druckaufbauzustand befindet. Das Kryogen kann dabei durch einen Wärmetauscher geleitet werden, welcher in dem sich in dem ersten Druckaufbauzustand befindenden Behälter angeordnet ist. Jeder Behälter kann einen derartigen Wärmetauscher umfassen.

Gemäß einer weiteren Ausführungsform wird in dem Schritt b) der sich in dem ersten Druckaufbauzustand befindende Behälter dadurch in den zweiten Druckaufbauzustand verbracht, dass der sich in dem ersten Druckaufbauzustand befindende Behälter mit Hilfe eines Heizelements erwärmt wird.

Hierzu sind sämtliche Ventile geschlossen, welche dem sich in dem zweiten Druckaufbauzustand zu verbringendem Behälter zugeordneten sind. Das Heizelement kann beispielsweise ein innerhalb des Behälters angeordnetes elektrisches Heizelement sein. Das Heizelement kann jedoch auch ein luft- oder wasserbeheizter Wärmetauscher sein.

Gemäß einer weiteren Ausführungsform wird in dem Schritt b) dem Kryogen, welches von dem sich in dem Arbeitszustand befindenden Behälter zu dem Verbraucher gefördert wird, mit Hilfe eines Wärmetauschers Wärme aus dem Kryogen, welches von dem sich in dem zweiten Druckabbauzustand befindenden Behälter zu dem sich in dem ersten Druckaufbauzustand befindenden Behälter gefördert wird, zugeführt.

Das heißt, es kann eine Kälterückgewinnung durchgeführt werden. Die Kälterückgewinnung wird dabei derart durchgeführt, dass das zu dem Verbraucher geförderte Kryogen in dem Entspannungsventil entspannt und dadurch abgekühlt wird. Das Kryogen, welches von dem sich in dem zweiten Druckabbauzustand befindenden Behälter zu dem sich in dem ersten Druckaufbauzustand befindenden Behälter gefördert wird, gibt dabei Wärme auf das entspannte Kryogen ab.

Gemäß einer weiteren Ausführungsform wird in dem Schritt a) das von dem sich in dem Arbeitszustand befindenden Behälter zu dem Verbraucher geförderte Kryogen mit Hilfe eines Entspannungsventils, insbesondere eines Joule-Thomson-Ventils, der Ventileinrichtung entspannt.

Das Kryogen kann dem Entspannungsventil als Gas zugeführt werden. Das Kryogen kann jedoch auch flüssige Bestandteile umfassen, die vor dem Verbraucher mit Hilfe eines Heizelements verdampft werden.

"Ein" ist vorliegend nicht zwangsweise als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine genaue Beschränkung auf genau die entsprechende Anzahl von Elementen verwirklicht sein muss. Vielmehr sind zahlenmäßige Abweichungen nach oben und nach unten möglich.

Weitere mögliche Implementierungen der Fördervorrichtung, der Speicherbehälteranordnung und/oder des Verfahrens umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Fördervorrichtung, der Speicherbehälteranordnung und/oder des Verfahrens hinzufügen.

Weitere vorteilhafte Ausgestaltungen der Fördervorrichtung, der Speicherbehälteranordnung und/oder des Verfahrens sind Gegenstand der Unteransprüche sowie der im Folgenden beschriebenen Ausführungsbeispiele der Fördervorrichtung, der Speicherbehälteranordnung und/oder des Verfahrens. Im Weiteren werden die Fördervorrichtung, die Speicherbehälteranordnung und/oder das Verfahren anhand von bevorzugten Ausführungsformen unter Bezugnahme auf die beigelegten Figuren näher erläutert.
Fig. 1 zeigt eine schematische Seitenansicht einer Ausführungsform eines Fahrzeugs;
Fig. 2 zeigt eine schematische Ansicht einer Ausführungsform einer Speicherbehälteranordnung für das Fahrzeug gemäß Fig. 1;
Fig. 3 zeigt eine schematische Ansicht einer Ausführungsform einer Ventileinrichtung für die Speicherbehälteranordnung gemäß Fig. 2; und
Fig. 4 zeigt ein schematisches Blockdiagramm einer Ausführungsform eines Verfahrens zum Fördern eines Kryogens.

In den Figuren sind gleiche oder funktionsgleiche Elemente mit denselben Bezugszeichen versehen worden, sofern nichts anderes angegeben ist.

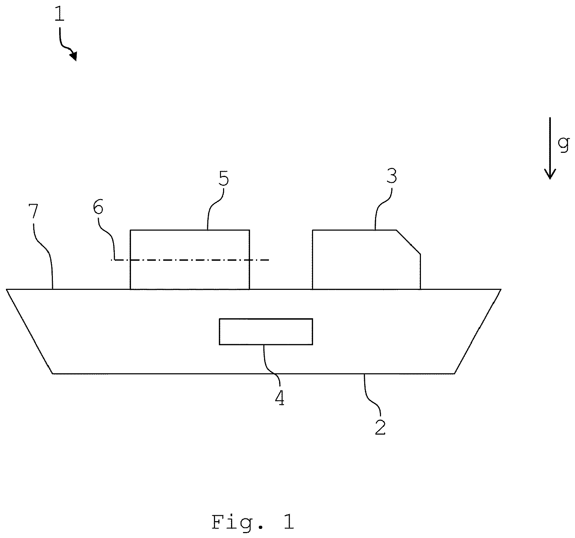

Die Fig. 1 zeigt eine stark vereinfachte schematische Seitenansicht einer Ausführungsform eines Fahrzeugs 1. Das Fahrzeug 1 kann beispielsweise ein maritimes Wasserfahrzeug, insbesondere ein Schiff, sein. Das Fahrzeug 1 kann als maritimes Fahrzeug bezeichnet werden. Insbesondere kann das Fahrzeug 1 eine maritime Personenfähre sein. Alternativ kann das Fahrzeug 1 auch ein Landfahrzeug sein. Nachfolgend wird jedoch davon ausgegangen, dass das Fahrzeug 1 ein Wasserfahrzeug ist.

Das Fahrzeug 1 umfasst einen Rumpf 2, der schwimmfähig ist. An oder auf dem Rumpf 2 ist eine Brücke 3 vorgesehen. Das Fahrzeug 1 wird vorzugsweise mit Wasserstoff betrieben. Hierzu kann das Fahrzeug 1 einen beliebigen Verbraucher 4 aufweisen. Der Verbraucher 4 ist bevorzugt eine Brennstoffzelle und wird daher nachfolgend als Brennstoffzelle 4 bezeichnet. Unter einer "Brennstoffzelle" ist vorliegend eine galvanische Zelle zu verstehen, welche die chemische Reaktionsenergie eines kontinuierlich zugeführten Brennstoffes, vorliegend Wasserstoff, und eines Oxidationsmittels, vorliegend Sauerstoff, in elektrische Energie wandelt. Mit Hilfe der erhaltenen elektrischen Energie kann beispielsweise ein nicht gezeigter Elektromotor angetrieben werden, der wiederum eine Schiffsschraube zum Antreiben des Fahrzeugs 1 antreibt.

Zum Versorgen der Brennstoffzelle 4 mit Wasserstoff ist ein Speicherbehälter 5 zum Speichern von flüssigem Wasserstoff vorgesehen. Der Speicherbehälter 5 ist rotationssymmetrisch zu einer Mittel- oder Symmetrieachse 6 aufgebaut. Der Speicherbehälter 5 kann beispielsweise innerhalb des Rumpfs 2, insbesondere innerhalb eines Maschinenraums, auf der Brücke 3 oder auf einem als Fundament 7 fungierenden Deck des Rumpfs 2 angeordnet sein. Dabei ist die Symmetrieachse 6 entlang einer Schwerkraftrichtung g orientiert. Das heißt, der Speicherbehälter 5 ist aufrecht oder vertikal positioniert. Somit ist die Symmetrieachse 6 senkrecht zu dem Fundament 7 platziert. Für den Fall, dass das Fahrzeug 1 beispielsweise ein auf einen Wasserstoffantrieb umgerüstetes Fahrzeug ist, kann der Speicherbehälter 5 beispielsweise auch in einem Kamin oder Schornstein des Fahrzeugs 1 platziert sein.

Bei maritimen Anwendungen muss mit durch den Seegang verursachter Bewegung des in dem Speicherbehälter 5 aufgenommenen flüssigen Wasserstoffs gerechnet werden. Bei einem liegend angeordneten zylinderförmigen Speicherbehälter (nicht gezeigt) wird durch die Massenträgheit des flüssigen Wasserstoffs und die durch den liegenden Einbau vorhandene Krümmung des Speicherbehälters sowohl an dessen zylinderförmiger Außenwandung als auch an dessen Enden ein großflächiges Schwappen des flüssigen Wasserstoffs begünstigt.

Dieses Schwappen, auch als Sloshing bezeichnet, führt zur Abkühlung der Dampfphase über dem flüssigen Wasserstoff und dadurch zur Druckreduzierung eines sich über dem flüssigen Wasserstoff gebildeten Gaspolsters. Dies kann in Abhängigkeit von dem aktuellen Seegang nachteilige Auswirkungen auf einen für Betriebskomponenten der Brennstoffzelle 4 zur Verfügung stehenden Versorgungsdruck haben, was zu einem instabilen Betrieb der Brennstoffzelle 4 führen kann. Dies gilt es zu vermeiden. Aus diesem Grund ist der Speicherbehälter 5 aufrecht angeordnet. Dies reduziert Sloshing-Effekte.

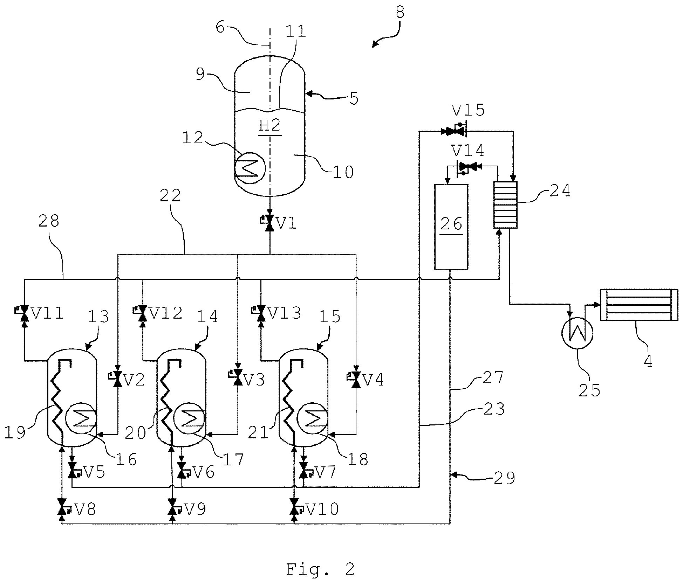

Die Fig. 2 zeigt eine schematische Ansicht einer Ausführungsform einer Speicherbehälteranordnung 8 die den Speicherbehälter 5 aufweist. Mit Hilfe der Speicherbehälteranordnung 8 ist es möglich, die Brennstoffzelle 4 unabhängig vom Seegang kontinuierlich mit gasförmigem Wasserstoff H2 mit einem konstanten Versorgungsdruck von 3,5 bis 5 bar zu versorgen.

Der Speicherbehälter 5 kann auch als Speichertank bezeichnet werden. Wie zuvor erwähnt, ist der Speicherbehälter 5 zur Aufnahme von flüssigem Wasserstoff H2 (Siedepunkt 1 bara: 20,268 K = -252,882 °C) geeignet. Daher kann der Speicherbehälter 5 auch als Wasserstoff-Speicherbehälter oder als Wasserstoff-Speichertank bezeichnet sein. Der Speicherbehälter 5 kann jedoch auch für andere kryogene Flüssigkeiten eingesetzt werden. Beispiele für kryogene Fluide oder Flüssigkeiten, oder kurz Kryogene, sind neben dem zuvor erwähnten flüssigen Wasserstoff H2 flüssiges Helium He (Siedepunkt 1 bara: 4,222 K = -268,928 °C), flüssiger Stickstoff N2 (Siedepunkt 1 bara: 77,35 K = -195,80 °C) oder flüssiger Sauerstoff O2 (Siedepunkt 1 bara: 90,18 K = -182,97 °C).

In dem Speicherbehälter 5 ist der flüssige Wasserstoff H2 aufgenommen. In dem Speicherbehälter 5 können, solange sich der Wasserstoff H2 im Zweiphasengebiet befindet, eine Gaszone 9 mit verdampftem Wasserstoff H2 und eine Flüssigkeitszone 10 mit flüssigem Wasserstoff H2 vorgesehen sein. Der Wasserstoff H2 weist also nach dem Einfüllen in den Speicherbehälter 5 zwei Phasen mit unterschiedlichen Aggregatszuständen, nämlich flüssig und gasförmig, auf. Das heißt, in dem Speicherbehälter 5 befindet sich eine Phasengrenze 11 zwischen dem flüssigen Wasserstoff H2 und dem gasförmigen Wasserstoff H2.

Der Speicherbehälter 5 umfasst ein Heizelement 12. Mit Hilfe des Heizelements 12 kann Druck in dem Speicherbehälter 5 aufgebaut werden oder ein bestimmter Druck gehalten werden. Das Heizelement 12 kann beispielsweise ein luft- oder wasserbeheizter Druckaufbauverdampfer sein. Mit Hilfe des Heizelements 12 kann flüssiger Wasserstoff H2 verdampft werden.

Neben dem Speicherbehälter 5 umfasst die Speicherbehälteranordnung 8 einen ersten Behälter 13, einen zweiten Behälter 14 sowie einen dritten Behälter 15. Die Behälter 13 bis 15 können identische Volumina aufweisen. Die Behälter 13 bis 15 weisen jeweils bevorzugt ein kleineres Volumen als der Speicherbehälter 5 auf. Auch die Behälter 13 bis 15 sind geeignet, flüssigen und/oder gasförmigen Wasserstoff H2 aufzunehmen und zumindest zeitweise zu speichern. Es können mehr als drei Behälter 13 bis 15 vorgesehen sein.

Jeder Behälter 13 bis 15 umfasst ein Heizelement 16 bis 18. Mit Hilfe der Heizelemente 16 bis 18 kann Druck in dem jeweiligen Behälter 13 bis 15 aufgebaut werden oder ein bestimmter Druck gehalten werden. Die Heizelemente 16 bis 18 können jeweils beispielsweise als luft- oder wasserbeheizter Druckaufbauverdampfer ausgebildet sein. Mit Hilfe der Heizelemente 16 bis 18 kann der flüssige Wasserstoff H2 verdampft werden. Ferner umfasst jeder Behälter 13 bis 15 einen Wärmetauscher 19 bis 21. Die Wärmetauscher 19 bis 21 können beispielsweise spiralförmig sein. Mit Hilfe der Wärmetauscher 19 bis 21 kann gasförmiger Wasserstoff H2 verflüssigt oder kondensiert werden.

Der Speicherbehälter 5 ist mit Hilfe einer sich verzweigenden Zufuhrleitung 22 mit den Behältern 13 bis 15 in Verbindung. Die Behälter 13 bis 15 sind dabei parallelgeschaltet. Dem Speicherbehälter 5 ist ein Ventil V1, insbesondere ein Hauptventil, zugeordnet, mit dessen Hilfe die Zufuhrleitung 22 mit dem Speicherbehälter 5 in Fluidverbindung gebracht werden kann, so dass Wasserstoff H2 aus dem Speicherbehälter 5 in die Zufuhrleitung 22 einströmen kann. Die Zufuhrleitung 22 kann mit Hilfe des Ventils V1 auch derart von dem Speicherbehälter 5 getrennt werden, dass kein Wasserstoff H2 mehr von dem Speicherbehälter 5 in die Zufuhrleitung 22 strömt. Das Ventil V1 kann ein Auf-Zu-Ventil sein. Das Ventil V1 ist kälteresistent. Das heißt, das Ventil V1 erfüllt seine Ventilfunktion auch bei niedrigen Temperaturen, beispielsweise am Siedepunkt des Wasserstoffs H2 von -252,882 °C. Beispielsweise kann das Ventil V1 ein Magnetventil oder ein Absperrventil sein. Das Ventil V1 ist bevorzugt automatisiert zu betätigen.

Dem ersten Behälter 13 ist ein Ventil V2 zugeordnet, mit dessen Hilfe der erste Behälter 13 mit der Zufuhrleitung 22 wahlweise fluidisch verbunden oder von dieser getrennt werden kann. "Fluidisch verbunden" bedeutet vorliegend, dass der erste Behälter 13 in Fluidverbindung mit der Zufuhrleitung 22 ist, so dass Wasserstoff H2 aus der Zufuhrleitung 22 in den ersten Behälter 13 eintreten kann. Dem zweiten Behälter 14 ist ein Ventil V3 zugeordnet, mit dessen Hilfe der zweite Behälter 14 mit der Zufuhrleitung 22 wahlweise fluidisch verbunden oder von dieser getrennt werden kann. Dem dritten Behälter 15 ist ein Ventil V4 zugeordnet, mit dessen Hilfe der dritte Behälter 15 mit der Zufuhrleitung 22 wahlweise fluidisch verbunden oder von dieser getrennt werden kann. Die Ventile V1 bis V4 können baugleich ausgeführt sein.

Mit Hilfe einer sich verzweigenden Abfuhrleitung 23 sind die Behälter 13 bis 15 mit der Brennstoffzelle 4 wirkverbunden. Die Behälter 13 bis 15 sind in der Abfuhrleitung 23 parallelgeschaltet. Die Abfuhrleitung 23 verzweigt sich zu den Behältern 13 bis 15, wobei dem ersten Behälter 13 ein Ventil V5 zugeordnet ist, mit dessen Hilfe der erste Behälter 13 mit der Abfuhrleitung 23 wahlweise in Fluidverbindung gebracht werden kann oder von dieser getrennt werden kann. Dem zweiten Behälter 14 ist ein entsprechendes Ventil V6 zugeordnet. Auch dem dritten Behälter 15 ist ein entsprechendes Ventil V7 zugeordnet. Die Ventile V1 bis V7 können baugleich ausgebildet sein.

Die Abfuhrleitung 23 ist mit einem Wärmetauscher 24 gekoppelt. Ferner weist die Abfuhrleitung 23 der Brennstoffzelle 4 vorgeschaltet ein Heizelement 25 zum Verdampfen flüssiger Anteile des Wasserstoffs H2 vor dem Zuführen desselben zu der Brennstoffzelle 4 auf. Hierdurch kann gewährleistet werden, dass der Brennstoffzelle 4 ausschließlich gasförmiger Wasserstoff H2 zugeführt wird.

Von einem p/n-Konverter 26 führt eine sich verzweigende Druckaufbauleitung 27 zu den Behältern 13 bis 15. Die Behälter 13 bis 15 sind in der Druckaufbauleitung 27 parallelgeschaltet. Die Druckaufbauleitung 27 verzweigt sich zu den Behältern 13 bis 15, wobei dem ersten Behälter 13 ein Ventil V8 zugeordnet ist, mit dessen Hilfe der erste Behälter 13 mit der Druckaufbauleitung 27 wahlweise in Fluidverbindung gebracht werden kann oder von dieser getrennt werden kann. Dem zweiten Behälter 14 ist ein entsprechendes Ventil V9 zugeordnet. Auch dem dritten Behälter 15 ist ein entsprechendes Ventil V10 zugeordnet. Die Ventile V1 bis V10 können baugleich ausgebildet sein.

Von den Behältern 13 bis 15 führt eine sich verzweigende Druckabbauleitung 28 zu dem Wärmetauscher 24 beziehungsweise zu dem dem Wärmetauscher 24 nachgeschalteten p/n-Konverter 26. Die Behälter 13 bis 15 sind in der Druckabbauleitung 28 parallelgeschaltet. Die Druckabbauleitung 28 verzweigt sich zu den Behältern 13 bis 15, wobei dem ersten Behälter 13 ein Ventil V11 zugeordnet ist, mit dessen Hilfe der erste Behälter 13 mit der Druckabbauleitung 28 wahlweise in Fluidverbindung gebracht werden kann oder von dieser getrennt werden kann. Dem zweiten Behälter 14 ist ein entsprechendes Ventil V12 zugeordnet. Auch dem dritten Behälter 15 ist ein entsprechendes Ventil V13 zugeordnet. Die Ventile V1 bis V13 können baugleich ausgebildet sein. Die Ventile V2, V3, V4 sind erste Einlassventile der Behälter 13 bis 15 und können als solche bezeichnet werden. Die Ventile V8, V9, V10 sind zweite Einlassventile der Behälter 13 bis 15 und können als solche bezeichnet werden. Die Ventile V5, V6, V7 sind erste Auslassventile der Behälter 13 bis 15 und können als solche bezeichnet werden. Die Ventile V11, V12, V13 sind zweite Auslassventile der Behälter 13 bis 15 und können als solche bezeichnet werden.

Zwischen dem Wärmetauscher 24 und dem p/n-Konverter 26 ist in der Druckaufbauleitung 27 ein Ventil V14 vorgesehen. Das Ventil V14 ist ein Joule-Thomson-Ventil. Das heißt, das Ventil V14 ist nicht baugleich mit den Ventilen V1 bis V13. Das Ventil V14 ist ein Entspannungsventil und kann daher als solches bezeichnet werden. Die Abfuhrleitung 23 umfasst ein weiteres Ventil V15, das stromaufwärts des Wärmetauschers 24 angeordnet ist. Auch das Ventil V15 ist ein Joule-Thomson-Ventil. Auch das Ventil V15 ist ein Entspannungsventil und kann als solches bezeichnet werden.

Die Behälter 13 bis 15, die Leitungen 22, 23, 27, 28 und die Ventile V1 bis V15 bilden eine thermische Fördervorrichtung 29, insbesondere eine thermische Pumpe, der Speicherbehälteranordnung 8. Auch der Speicherbehälter 5 und die Brennstoffzelle 4 können Teil der thermischen Fördervorrichtung 29 sein. "Thermisch" bedeutet in diesem Zusammenhang im Vergleich zu "mechanisch", dass die Fördervorrichtung 29, beispielsweise im Gegensatz zu einer mechanischen Kryopumpe, mit Ausnahme der Ventile V1 bis V15 keine beweglichen Teile aufweist. Das Fördern des Wasserstoffs H2 erfolgt nur mit Hilfe thermodynamischer Effekte.

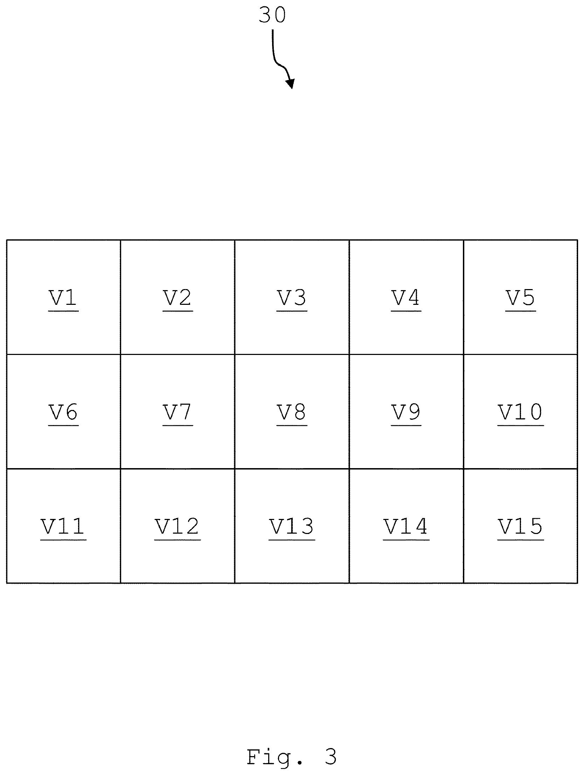

Wie die Fig 3 zeigt, sind die Ventile V1 bis V15 Teil einer Ventileinrichtung 30 der thermischen Fördervorrichtung 29. Die Ventileinrichtung 30 kann dabei als Ventilblock ausgebildet sein, in oder an welchem die Ventile V1 bis V15 angeordnet sind. Alternativ können die Ventile V1 bis V15, wie in der Fig. 2 gezeigt, auch voneinander beabstandet positioniert sein. Auch in diesem Fall bilden die Ventile V1 bis V15 in ihrer Gesamtheit die Ventileinrichtung 30.

Die Funktionsweise der Speicherbehälteranordnung 8 beziehungsweise der thermischen Fördervorrichtung 29 wird nachfolgend erläutert. Mit Hilfe der Ventile V1 bis V15 kann jeder der Behälter 13 bis 15 in unterschiedliche Zustände verbracht werden. Die Zustände sind wie folgt: Arbeitszustand A, erster Druckabbauzustand DAB1, zweiter Druckabbauzustand DAB2, erster Druckaufbauzustand DAU1, zweiter Druckaufbauzustand DAU2, Füllzustand F, erster Wartezustand W1 und zweiter Wartezustand W2. Die nachfolgende Tabelle zeigt den Druck und die Temperatur, welche in den jeweiligen Zuständen A, DAB1, DAB2, DAU1, DAU2, F, W1, W2 in dem jeweiligen Behälter 13 bis 15 herrschen.

| **Zustand** | **Druck [bar]** | **Temperatur [K]** |
|---|---|---|
| F | 1 | 19 |
| W1 | 1 | 19 |
| DAU1 | ca. 1,5 | 22 |
| DAU2 | 9 | 30,5 |
| W2 | 9 | 30,5 |
| A | 9 | 30,5 |
| DAB1 | 3,5 | 25 |
| DAB2 | 1 | ca. 19 |

Die nachfolgende Tabelle zeigt, wie die drei Behälter 13 bis 15 mit Hilfe der Ventile V1 bis V15 in die Zustände A, DAB1, DAB2, DAU1, DAU2, F, W1 und W2 verbracht werden können, so dass die thermische Fördervorrichtung 29 der Brennstoffzelle 4 kontinuierlich gasförmigen Wasserstoff H2 mit einem Versorgungsdruck von 3,5 bis 5 bar zuführt. Dabei steht "x" für ein offenes und "-" für ein geschlossenes Ventil V1 bis V15. Es werden dabei Schritte S1 bis S12 durchgeführt. Nach Beendigung des Schritts S12 wird wieder bei dem Schritt S1 begonnen.

| **Schritt/ Behälter/ Ventil** | **S1** | **S2** | **S3** | **S4** | **S5** | **S6** | **S7** | **S8** | **S9** | **S10** | **S11** | **S12** |
|---|---|---|---|---|---|---|---|---|---|---|---|---|
| **13** | F | W1 | W1 | DAU1 | DAU2 | W2 | A | A | A | A | DAB1 | DAB2 |
| **14** | DAU2 | W2 | A | A | A | A | DAB1 | DAB2 | F | W1 | W1 | DAU1 |
| **15** | A | A | DAB1 | DAB2 | F | W1 | W1 | DAU1 | DAU2 | W2 | A | A |
| **V1** | x | - | - | - | x | - | - | - | x | - | - | - |
| **V2** | x | - | - | - | - | - | - | - | - | - | - | - |
| **V3** | - | - | - | - | - | - | - | - | x | - | - | - |
| **V4** | - | - | - | - | x | - | - | - | - | - | - | - |
| **V5** | - | - | - | - | - | - | x | x | x | x | - | - |
| **V6** | - | - | x | x | x | x | - | - | - | - | - | - |
| **V7** | x | x | - | - | - | - | - | - | - | - | x | x |
| **V8** | - | - | - | x | - | - | - | - | - | - | - | - |
| **V9** | - | - | - | - | - | - | - | - | - | - | - | x |
| **V10** | - | - | - | - | - | - | - | x | - | - | - | - |
| **V11** | - | - | - | - | - | - | - | - | - | - | x | x |
| **V12** | - | - | - | - | - | - | x | x | - | - | - | - |
| **V13** | - | - | x | x | - | - | - | - | - | - | - | - |
| **V14** | - | - | - | x | - | - | - | x | - | - | - | x |
| **V15** | x | x | x | x | x | x | x | x | x | x | x | x |

Beispielhaft wird nachfolgend anhand des Schritts S1 die Funktion der thermischen Fördervorrichtung 29 erläutert. In dem Schritt S1 befindet sich der nahezu drucklose erste Behälter 13 in dem Füllzustand F. Hierzu sind die Ventile V1, V2 geöffnet. Die dem ersten Behälter 13 zugeordneten Ventile V5, V8, V11 sind geschlossen. Der Wasserstoff H2 strömt aus dem Speicherbehälter 5 über die Zufuhrleitung 22 in den ersten Behälter 13 ein. In dem Speicherbehälter 5 herrscht ein Druck von 1 bar. Der Druck kann mit Hilfe des Heizelements 12 aufrechterhalten werden.

Der zweite Behälter 14 ist in dem Schritt S1 gefüllt und befindet sich in dem zweiten Druckaufbauzustand DAU2. In dem zweiten Druckaufbauzustand DAU2 sind alle dem zweiten Behälter 14 zugeordneten Ventile V3, V6, V9, V12 geschlossen, so dass dem zweiten Behälter 14 weder Wasserstoff H2 zugeführt werden kann noch aus diesem abgeführt werden kann. Das Heizelement 17 des zweiten Behälters 14 befindet sich im Betrieb, so dass in dem zweiten Behälter 14 der für den zweiten Druckaufbauzustand DAU2 erforderliche Druck von 9 bar bei einer Temperatur von 30,5 K erreicht wird. Mit Hilfe des Heizelements 17 kann Wasserstoff H2 verdampft werden, was zu einer Druckerhöhung in dem zweiten Behälter 14 führt.

Ferner befindet sich der dritte Behälter 15 in dem Arbeitszustand A. In dem Arbeitszustand sind die Ventile V7, V15 geöffnet, so dass der Brennstoffzelle 4 Wasserstoff H2 aus dem dritten Behälter 15 zugeführt werden kann. Alle anderen dem dritten Behälter 15 zugeordneten Ventile V4, V7, V13 sind geschlossen. Der Wasserstoff H2 verlässt den dritten Behälter 15 mit einem Druck von 9 bar bei 30,5 K. In dem Ventil V15 wird der Wasserstoff H2 entspannt, wodurch dieser sich und den Wärmetauscher 24 abkühlt. Stromabwärts des Ventils V15 weist der Wasserstoff H2 einen geeigneten Versorgungsdruck von 3,5 bis 5 bar auf und kann der Brennstoffzelle 4 zugeführt werden. Flüssige Bestandteile des Wasserstoffs H2 werden stromaufwärts der Brennstoffzelle 4 mit Hilfe des Heizelements 25 verdampft.

Anhand des ersten Behälters 13 wird beispielhaft die Durchführung der Schritte S1 bis S12 erläutert. Wie zuvor erläutert befindet sich der nahezu drucklose erste Behälter 13 in dem Schritt S1 in dem Füllzustand F. Hierzu sind die Ventile V1, V2 geöffnet. Die dem ersten Behälter 13 zugeordneten Ventile V5, V8, V11 sind geschlossen. Der Wasserstoff H2 strömt aus dem Speicherbehälter 5 über die Zufuhrleitung 22 in den ersten Behälter 13 ein. In dem Speicherbehälter 5 herrscht ein Druck von 1 bar. Der Druck kann mit Hilfe des Heizelements 12 aufrechterhalten werden.

Nach dem Füllzustand F wird der gefüllte erste Behälter 13 in dem Schritt S2 in den ersten Wartezustand W1 geschaltet. Hierzu werden alle dem ersten Behälter 13 zugeordneten Ventile V2, V5, V8, V11 geschlossen. In dem ersten Wartezustand W1 herrscht in dem ersten Behälter 13 ein Druck von 1 bar bei 19 K. In dem Schritt S3 verbleibt der erste Behälter 13 in dem ersten Wartezustand W1.

Anschließend wird der erste Behälter 13 in dem Schritt S4 in den ersten Druckaufbauzustand DAU1 geschaltet. Hierzu sind die Ventile V8, V13, V14 geöffnet. Wie der obigen Tabelle zu entnehmen ist, befindet sich der dritte Behälter 15 in dem Schritt S4 in dem zweiten Druckabbauzustand DAB2. Das heißt, der Druckabbau in dem dritten Behälter 15 wird für den ersten Druckaufbauzustand DAU1 in dem ersten Behälter 13 genutzt. Der Wasserstoff H2 strömt aus dem dritten Behälter 15 über das Ventil V13 und die Druckabbauleitung 28 zu dem Wärmetauscher 24, der genutzt werden kann, den Wasserstoff H2 in der Druckabbauleitung 28 abzukühlen. In dem Ventil V14 wird der Wasserstoff H2 entspannt und über die Druckaufbauleitung 27 und das Ventil V8 dem ersten Behälter 13 zugeführt. Der erste Behälter 13 kann dabei mit Hilfe des Wärmetauschers 19 abgekühlt werden. In dem ersten Druckaufbauzustand DAU1 wird in dem ersten Behälter 13 ein Druck von etwa 1,5 bar bei 19 K erreicht.

In dem Schritt S5 wird der erste Behälter 13 in den zweiten Druckaufbauzustand DAU2 verbracht. Hierzu werden alle dem ersten Behälter 13 zugeordneten Ventile V2, V5, V8, V11 geschlossen. Mit Hilfe des Heizelements 16 wird in dem ersten Behälter 13 in dem zweiten Druckaufbauzustand DAU2 ein Druck von 9 bar bei 30,5 K erreicht.

Nach dem Schritt S5 folgt in dem Schritt S6 für den ersten Behälter 13 der zweite Wartezustand W2. Alle dem ersten Behälter 13 zugeordneten Ventile V2, V5, V8, V11 sind nach wie vor geschlossen. In dem zweiten Wartezustand W2 herrscht, wie in dem zweiten Druckaufbauzustand DAU2 ein Druck von 9 bar bei 30,5 K.

In dem Schritt S7 wird der erste Behälter 13 in den Arbeitszustand A verbracht. Hierzu werden die Ventile V5, V15 geöffnet. Der erste Behälter 13 liefert über die Ventile V5, V15 Wasserstoff an die Brennstoffzelle 4. In dem Arbeitszustand A herrscht in dem ersten Behälter 13 ein Druck von 9 bar bei 30,5 K. Der erste Behälter verbleibt in den Schritten S7 bis S10 in dem Arbeitszustand A und versorgt die Brennstoffzelle 4 kontinuierlich mit Wasserstoff H2.

Um den ersten Behälter 13 in dem Schritt S1 wieder in den Füllzustand F verbringen zu können, ist ein Druckabbau in dem ersten Behälter 13 erforderlich. Dies geschieht zunächst in dem Schritt S11, in dem der erste Behälter 13 in den ersten Druckabbauzustand DAB1 verbracht wird. Hierzu wird das Ventil V11 geöffnet. Die anderen dem ersten Behälter 13 zugeordneten Ventile V2, V5, V8 sind geschlossen. Der Druckabbau kann nun in die Druckabbauleitung 28 hinein erfolgen. Das Ventil V14 ist noch geschlossen. In dem ersten Druckabbauzustand DAB1 wird in dem ersten Behälter 13 ein Druck von 3,5 bar bei 25 K erreicht.

In dem Schritt S12 wird der erste Behälter 13 in den zweiten Druckabbauzustand DAB2 verbracht. Hierzu bleibt das Ventil V11 geöffnet. Zusätzlich werden das Ventil V14 sowie das Ventil V9 geöffnet, so dass der zweite Behälter 14 in den ersten Druckaufbauzustand DAU1 verbracht werden kann. In dem zweiten Druckabbauzustand DAB2 herrscht in dem ersten Behälter 13 ein Druck von 1 bar bei etwa 19 K. Der erste Behälter 13 kann nun in dem Schritt S1 wieder befüllt werden und in den Füllzustand F verbracht werden.

Die Schritte S1 bis S12 werden, wie der obigen Tabelle zu entnehmen ist, für jeden Behälter 13 bis 15 durchgeführt. Die Schritte S1 bis S12 werden versetzt durchgeführt, so dass sich nie zwei der Behälter 13 bis 15 in demselben Zustand A, DAB1, DAB2, DAU1, DAU2, F, W1, W2 befinden. Immer einer der Behälter 13 bis 15 befindet sich in dem Arbeitszustand A, so dass die Brennstoffzelle 4 kontinuierlich mit Wasserstoff H2 versorgt werden kann. Jeweils einer der Behälter 13 bis 15 wird über vier aufeinanderfolgende der Schritte S1 bis S12 in dem Arbeitszustand A gehalten.

Mit Hilfe der thermischen Fördervorrichtung 29 beziehungsweise mit Hilfe der Speicherbehälteranordnung 8 können stabile Betriebsbedingungen für den kontinuierlichen Betrieb der Brennstoffzelle 4 erreicht werden. Es kann ein stabiler Betrieb unabhängig von Bewegungen durch Seegang sowie unabhängig von den thermodynamischen Schichtungen des Wasserstoffs H2 in dem Speicherbehälter 5 erreicht werden. Die erforderliche Förderung und Druckerhöhung des Wasserstoffs H2 wird durch die Nutzung verfahrenstechnischer Effekte erreicht. Durch die Kälterückgewinnung ist eine Druckreduzierung vor dem Füllzustand F des jeweiligen Behälters 13 bis 15 möglich. Vorteilhafterweise weist die thermische Fördervorrichtung 29 im Vergleich zu einer mechanischen Kryopumpe bis auf die Ventile V1 bis V15 keine beweglichen Teile auf. Die thermische Fördervorrichtung 29 ist somit robust und wartungsfrei.

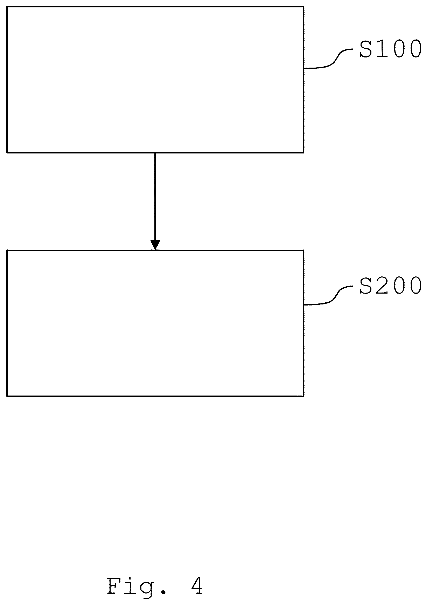

Die Fig. 4 zeigt ein schematisches Blockdiagramm einer Ausführungsform eines Verfahrens zum Fördern des Wasserstoffs H2 beziehungsweise zum Betreiben der thermischen Fördervorrichtung 29.

Bei dem Verfahren wird in einem Schritt S100 die Ventileinrichtung 30 derart geschaltet, dass stets einer der Behälter 13 bis 15 in den Arbeitszustand A verbracht wird, in welchem dieser durch eine entsprechende Schaltstellung der Ventile V5, V6, V7, V15 in Fluidverbindung mit der Brennstoffzelle 4 ist und so der Wasserstoff H2 zu der Brennstoffzelle 4 gefördert wird. In einem Schritt S200 wird die Ventileinrichtung 30 derart geschaltet, dass während des Schritts S100 die anderen beiden Behälter 13 bis 15 wahlweise in einen der Druckabbauzustände DAB1, DAB2, in einen der Druckaufbauzustände DAU1, DAU2, in den Füllzustand F oder in einen der Wartezustände W1, W2 verbracht werden.

In dem Schritt S200 werden die anderen beiden Behälter 13 bis 15, die sich nicht in dem Arbeitszustand befinden, wahlweise in den ersten Druckabbauzustand DAB, in den zweiten Druckabbauzustand DAB2, in den ersten Druckaufbauzustand DAU1, in den zweiten Druckaufbauzustand DAU2, in den Füllzustand F, in den ersten Wartezustand W1 oder in den zweiten Wartezustand W2 verbracht. Ferner wird in dem Schritt S200 derjenige Behälter 13 bis 15, welcher in den Füllzustand F verbracht wird, in Fluidverbindung mit dem Speicherbehälter 5 gebracht, so dass der Wasserstoff H2 aus dem Speicherbehälter 5 in den sich in dem Füllzustand F befindenden Behälter 13 bis 15 gefördert wird.

Weiterhin wird in dem Schritt S200 der sich in dem Füllzustand F befindende Behälter 13 bis 15 dadurch in den ersten Druckaufbauzustand DAU1 verbracht, dass der sich in dem Füllzustand F befindende Behälter 13 bis 15 mit demjenigen Behälter 13 bis 15, welcher in den zweiten Druckabbauzustand DAB2 verbracht wird, in Fluidverbindung gebracht wird, so dass der sich in dem ersten Druckaufbauzustand DAU1 befindende Behälter 13 bis 15 mit Druck beaufschlagt wird. In dem Schritt S200 wird der sich in dem ersten Druckaufbauzustand DAU1 befindende Behälter 13 bis 15 dadurch in den zweiten Druckaufbauzustand DAU2 verbracht, dass der sich in dem ersten Druckaufbauzustand DAU1 befindende Behälter 13 bis 15 mit Hilfe des jeweiligen Heizelements 16 bis 18 erwärmt wird. Hierbei wird Wärme in den Wasserstoff H2 eingebracht.

Ferner wird in dem Schritt S200 dem Wasserstoff H2, welcher von dem sich in dem Arbeitszustand A befindenden Behälter 13 bis 15 zu der Brennstoffzelle 4 gefördert wird, mit Hilfe des Wärmetauschers 24 Wärme aus dem Wasserstoff H2, welcher von dem sich in dem zweiten Druckabbauzustand DAB2 befindenden Behälter 13 bis 15 zu dem sich in dem ersten Druckaufbauzustand DAU1 befindenden Behälter 13 bis 15 gefördert wird, übertragen wird. In dem Schritt S100 wird der von dem sich in dem Arbeitszustand A befindenden Behälter 13 bis 15 zu der Brennstoffzelle 4 geförderte Wasserstoff H2 mit Hilfe des Ventils V15, das insbesondere als Joule-Thomson-Ventils ausgebildet ist, entspannt.

Obwohl die vorliegende Erfindung anhand von Ausführungsbeispielen beschrieben wurde, ist sie vielfältig modifizierbar.

### Verwendete Bezugszeichen

- 1: Fahrzeug
- 2: Rumpf
- 3: Brücke
- 4: Verbraucher/Brennstoffzelle
- 5: Speicherbehälter
- 6: Symmetrieachse
- 7: Fundament
- 8: Speicherbehälteranordnung
- 9: Gaszone
- 10: Flüssigkeitszone
- 11: Phasengrenze
- 12: Heizelement
- 13: Behälter
- 14: Behälter
- 15: Behälter
- 16: Heizelement
- 17: Heizelement
- 18: Heizelement
- 19: Wärmetauscher
- 20: Wärmetauscher
- 21: Wärmetauscher
- 22: Zufuhrleitung
- 23: Abfuhrleitung
- 24: Wärmetauscher
- 25: Heizelement
- 26: p/n-Konverter
- 27: Druckaufbauleitung
- 28: Druckabbauleitung
- 29: Fördervorrichtung
- 30: Ventileinrichtung

- A: Arbeitszustand
- DAB1: Druckabbauzustand
- DAB2: Druckabbauzustand
- DAU1: Druckaufbauzustand
- DAU2: Druckaufbauzustand
- F: Füllzustand
- g: Schwerkraftrichtung
- H2: Kryogen/Wasserstoff
- S1: Schritt
- S2: Schritt
- S3: Schritt
- S4: Schritt
- S5: Schritt
- S6: Schritt
- S7: Schritt
- S8: Schritt
- S9: Schritt
- S10: Schritt
- S11: Schritt
- S12: Schritt
- S100: Schritt
- S200: Schritt
- V1: Ventil
- V2: Ventil/Einlassventil
- V3: Ventil/Einlassventil
- V4: Ventil/Einlassventil
- V5: Ventil/Auslassventil
- V6: Ventil/Auslassventil
- V7: Ventil/Auslassventil
- V8: Ventil/Einlassventil
- V9: Ventil/Einlassventil
- V10: Ventil/Einlassventil
- V11: Ventil/Auslassventil
- V12: Ventil/Auslassventil
- V13: Ventil/Auslassventil
- V14: Ventil/Entspannungsventil
- V15: Ventil/Entspannungsventil
- W1: Wartezustand
- W2: Wartezustand

## Patentansprüche

1. Fördervorrichtung (29) zum Fördern eines Kryogens (H2) von einem Speicherbehälter (5) zu einem Verbraucher (4), mit einem ersten Behälter (13) zum Zwischenspeichern des Kryogens (H2), einem zweiten Behälter (14) zum Zwischenspeichern des Kryogens (H2), einem dritten Behälter (15) zum Zwischenspeichern des Kryogens (H2), und einer Ventileinrichtung (30), wobei die Ventileinrichtung (30) dazu eingerichtet ist, die Behälter (13 - 15) wahlweise in unterschiedliche Zustände (A, DAB1, DAB2, DAU1, DAU2, F, W1, W2) zu schalten, wobei stets einer der Behälter (13 - 15) in einen Arbeitszustand (A) geschaltet ist, in welchem der jeweilige Behälter (13 - 15) in Fluidverbindung mit dem Verbraucher (4) ist und so das Kryogen (H2) zu dem Verbraucher (4) fördert, und wobei die anderen beiden Behälter (13 - 15) wahlweise jeweils in einen Druckabbauzustand (DAB1, DAB2), in einen Druckaufbauzustand (DAU1, DAU2), in einen Füllzustand (F) oder in einen Wartezustand (W1, W2) geschaltet sind.

2. Fördervorrichtung nach Anspruch 1, wobei jedem Behälter (13 - 15) ein erstes Einlassventil (V2, V3, V4), ein zweites Einlassventil (V8, V9, V10), ein erstes Auslassventil (V5, V6, V7) und ein zweites Auslassventil (V11, V12, V13) der Ventileinrichtung (30) zugeordnet sind.

3. Fördervorrichtung nach Anspruch 1 oder 2, wobei jeder Behälter (13 - 15) ein Heizelement (16 - 18) zum Einbringen von Wärme in das in dem jeweiligen Behälter (13 - 15) aufgenommene Kryogen (H2) aufweist.

4. Fördervorrichtung nach einem der Ansprüche 1 - 3, ferner umfassend eine Zufuhrleitung (22) zum Zuführen des Kryogens (H2) von dem Speicherbehälter (5) zu dem jeweiligen Behälter (13 - 15), wobei die Behälter (13 - 15) parallel in die Zufuhrleitung (22) geschaltet sind.

5. Fördervorrichtung nach einem der Ansprüche 1 - 4, ferner umfassend eine Abfuhrleitung (23) zum Abführen des Kryogens (H2) von dem jeweiligen Behälter (13 - 15) zu dem Verbraucher (4), wobei die Behälter (13 - 15) parallel in die Abfuhrleitung (23) geschaltet sind.

6. Fördervorrichtung nach einem der Ansprüche 1 - 5, wobei die Ventileinrichtung (30) ein Entspannungsventil (V15), insbesondere ein Joule-Thomson-Ventil, zum Entspannen des Kryogens (H2) vor dem Zuführen desselben zu dem Verbraucher (4) aufweist.

7. Fördervorrichtung nach Anspruch 6, ferner umfassend einen stromabwärts des Entspannungsventils (V15) angeordneten Wärmetauscher (24) zur Kälterückgewinnung aus dem entspannten Kryogen (H2).

8. Speicherbehälteranordnung (8) mit einem Speicherbehälter (5) zum Speichern eines Kryogens (H2), einem Verbraucher (4), insbesondere einer Brennstoffzelle, und einer Fördervorrichtung (29) nach einem der Ansprüche 1 - 7.

9. Verfahren zum Fördern eines Kryogens (H2) von einem Speicherbehälter (5) zu einem Verbraucher (4) mit Hilfe einer Fördervorrichtung (29), welche einen ersten Behälter (13) zum Zwischenspeichern des Kryogens (H2), einen zweiten Behälter (14) zum Zwischenspeichern des Kryogens (H2), einen dritten Behälter (15) zum Zwischenspeichern des Kryogens (H2), und eine Ventileinrichtung (30) aufweist, mit folgenden Schritten:
a) Schalten (S100) der Ventileinrichtung (30) derart, dass stets einer der Behälter (13 - 15) in einen Arbeitszustand (A) verbracht wird, in welchem der jeweilige Behälter (13 - 15) in Fluidverbindung mit dem Verbraucher (4) ist und so das Kryogen (H2) zu dem Verbraucher (4) gefördert wird, und
b) Schalten (S200) der Ventileinrichtung (30) derart, dass während des Schritts a) die anderen beiden Behälter (13 - 15) wahlweise in einen Druckabbauzustand (DAB1, DAB2), in einen Druckaufbauzustand (DAU1, DAU2), in einen Füllzustand (F) oder in einen Wartezustand (W1, W2) verbracht werden.

10. Verfahren nach Anspruch 9, wobei in dem Schritt b) die anderen beiden Behälter (13 - 15) wahlweise in einen ersten Druckabbauzustand (DAB1), in einen zweiten Druckabbauzustand (DAB2), in einen ersten Druckaufbauzustand (DAU1), in einen zweiten Druckaufbauzustand (DAU2), in den Füllzustand (F), in einen ersten Wartezustand (W1) oder in einen zweiten Wartezustand (W2) verbracht werden.

11. Verfahren nach Anspruch 10, wobei in dem Schritt b) derjenige Behälter (13 -15), welcher in den Füllzustand (F) verbracht wird, in Fluidverbindung mit dem Speicherbehälter (5) gebracht wird, so dass das Kryogen (H2) aus dem Speicherbehälter (5) in den sich in dem Füllzustand (F) befindenden Behälter (13 - 15) gefördert wird.

12. Verfahren nach Anspruch 11, wobei in dem Schritt b) der sich in dem Füllzustand (F) befindende Behälter (13 - 15) dadurch in den ersten Druckaufbauzustand (DAU1) verbracht wird, dass der sich in dem Füllzustand (F) befindende Behälter (13 - 15) mit demjenigen Behälter (13 - 15), welcher in den zweiten Druckabbauzustand (DAB2) verbracht wird, in Fluidverbindung gebracht wird, so dass der sich in dem ersten Druckaufbauzustand (DAU1) befindende Behälter (13 - 15) von dem sich in dem zweiten Druckabbauzustand (DAB2) befindenden Behälter (13 - 15) mit Druck beaufschlagt wird.

13. Verfahren nach Anspruch 12, wobei in dem Schritt b) der sich in dem ersten Druckaufbauzustand (DAU1) befindende Behälter (13 - 15) dadurch in den zweiten Druckaufbauzustand (DAU2) verbracht wird, dass der sich in dem ersten Druckaufbauzustand (DAU1) befindende Behälter (13 - 15) mit Hilfe eines Heizelements (16 - 18) erwärmt wird.

14. Verfahren nach einem der Ansprüche 10 - 13, wobei in dem Schritt b) dem Kryogen (H2), welches von dem sich in dem Arbeitszustand (A) befindenden Behälter (13 - 15) zu dem Verbraucher (4) gefördert wird, mit Hilfe eines Wärmetauschers (24) Wärme aus dem Kryogen (H2), welches von dem sich in dem zweiten Druckabbauzustand (DAB2) befindenden Behälter (13 - 15) zu dem sich in dem ersten Druckaufbauzustand (DAU1) befindenden Behälter (13 - 15) gefördert wird, zugeführt wird.

15. Verfahren nach einem der Ansprüche 9 - 14, wobei in dem Schritt a) das von dem sich in dem Arbeitszustand (A) befindenden Behälter (13 - 15) zu dem Verbraucher (4) geförderte Kryogen (H2) mit Hilfe eines Entspannungsventils (V15), insbesondere eines Joule-Thomson-Ventils, der Ventileinrichtung (30) entspannt wird.
